(19) Europäisches Patentamt
European Patent Office
Office européen des brevets

(11) **EP 1 419 295 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(21) Anmeldenummer: **02754983.1**

(22) Anmeldetag: **07.08.2002**

(51) Int Cl.:
**D06F 37/20** (2006.01)

(86) Internationale Anmeldenummer:
**PCT/EP2002/008840**

(87) Internationale Veröffentlichungsnummer:
**WO 2003/014455 (20.02.2003 Gazette 2003/08)**

(54) **WASCHMASCHINE MIT SENSOR ZUR UNWUCHTÜBERWACHUNG**

WASHING MACHINE WITH IMBALANCE MONITORING SENSOR

MACHINE À LAVER AVEC CAPTEUR DE LA MASSE NON ÉQUILIBRÉE

(84) Benannte Vertragsstaaten:
**AT BE BG CH CY CZ DE DK EE ES FI FR GB GR IE IT LI LU MC NL PT SE SK TR**

(30) Priorität: **10.08.2001 DE 10139388**

(43) Veröffentlichungstag der Anmeldung:
**19.05.2004 Patentblatt 2004/21**

(60) Teilanmeldung:
**05112335.4 / 1 643 027**

(73) Patentinhaber: **BSH Bosch und Siemens Hausgeräte GmbH**
**81739 München (DE)**

(72) Erfinder:
• **LORENZ, Tilmann**
**93049 Regensburg (DE)**

• **REITMEIER, Willibald**
**93155 Hemau (DE)**

(56) Entgegenhaltungen:
| | |
|---|---|
| **EP-A- 0 294 014** | **EP-A- 0 299 395** |
| **EP-A- 0 598 658** | **EP-A- 0 972 874** |
| **EP-A- 0 984 092** | **EP-A- 1 087 052** |
| **DE-A- 4 020 898** | **DE-A- 10 034 546** |
| **DE-C- 4 243 978** | **DE-U- 20 016 793** |

• **BUGNACKI M ET AL: "A MICROMACHINED THERMAL ACCELEROMETER FOR MOTION, INCLINATION, AND VIBRATION MEASUREMENT" SENSORS, HELMERS PUBLISHING, US, Bd. 18, Nr. 6, Juni 2001 (2001-06), Seiten 98-104, XP001020754 ISSN: 0746-9462**

## Beschreibung

Die Erfindung bezieht sich auf ein Wäschebehandlungsgerät mit einer Anordnung zur Bestimmung der Unwucht.

Aus der EP 0 539 617 A1 ist bereits eine Anordnung zur Überwachung der Unwucht bei einer Waschmaschine bekannt. Bei dieser Waschmaschine ist ein mittels einer Drehzahlerfassungsvorrichtung, beispielsweise mittels eines Tachogenerators, in einer Regelvorrichtung überwachter Elektromotor, insbesondere ein Reihenschlussmotor, vorgesehen. Ein die Unwucht erfassender Unwuchtsensor ist als Mikroschalter ausgebildet, der in Reihe zu der Drehzahlerfassungsvorrichtung, beispielsweise den Tachogenerator, angeschlossen ist. Bei Erreichen einer unzulässigen Unwucht unterbricht der Unwuchtsensor die Verbindung zwischen der Drehzahlerfassungsvorrichtung und der Regelvorrichtung.

In Bugnacki M. et al.: "A micromachined thermal accelerometer for motion, inclination and vibration measurement" Sensors, Helmers Publishing, US, Bd. 18, Nr. 6, Juni 2001, Seiten 98-104 ist ein Beschleunigungssensor beschrieben, der zur Messung eines Temperaturprofils einer in dem Sensor integrierten Heizvorrichtung ausgebildet ist, wobei das Temperaturprofil durch eine Beschleunigung veränderbar ist. Des weiteren ist dort offenbart, dass solch ein Sensor in Waschmaschinen eingesetzt werden kann.

In EP 1 087 052 A1 ist eine Waschmaschine mit einem Beschleunigungssensor zur Bestimmung von Unwuchten der Wäschetrommel offenbart. Dieser Beschleunigungssensor ist zusammen mit weiteren Sensoren, die der Steuerung des Waschvorgangs dienen, in einem gemeinsamen Gehäuse innerhalb des Laugenbehälters in einem Bereich angeordnet, der von der Waschlauge bedeckt ist.

In EP 0 972 874 A1 ist eine Waschmaschine mit einem Sensor zur Detektion der Unwucht offenbart, der an einem dem Laugenbehälter gegenüberliegendem Ende der Aufhängung des Laugenbehälters angeordnet ist. Der Unwuchtsensor ist in geradliniger Verlängerung des Aufhängegestänges angeordnet, wobei der Sensor lediglich Bewegungen in dieser Richtung detektiert.

In EP 0 294 014 A1 ist eine Waschmaschine mit einem Unwuchtsensor offenbart, wobei der Unwuchtsensor in dem unteren Montageblock eines der Stoßdämpfers angeordnet ist.

In EP 0 984 092 A1 ist eine Waschmaschine mit einem Gewichts- oder Lagesensor offenbart, der parallel zu einem der Stoßdämpfer angeordnet ist. Anstelle des Gewichts- oder Lagesensors kann auch ein Beschleunigungssensor verwendet werden.

Es ist die Aufgabe der Erfindung, eine neue Vorrichtung zur Erfassung von Unwuchten zu schaffen.

Diese Aufgabe wird erfindungsgemäß durch die Merkmale von Anspruch 1 gelöst.

Die Waschmaschine weist mindestens einen Sensor zur Messung eines Temperaturprofils einer in dem Sensor integrierten Heizvorrichtung auf, wobei das Temperaturprofil durch eine von einer Unwucht hervorgerufene Beschleunigung veränderbar ist.

Wenn sich die Temperaturverteilung in einem Medium, das durch die Heizvorrichtung des Sensors erwärmt wird, infolge einer von einer Unwucht hervorgerufenen Beschleunigung ändert, lässt sich die dadurch geänderte Temperaturverteilung messen und auf die Stärke der Beschleunigung rückschließen. Auch die Richtung der Beschleunigung lässt sich bestimmen, wenn die Temperaturverteilung in zwei Achsen gemessen wird.

Der Sensor ist erfindungsgemäß auf einem mit dem Laugenbehälter verbundenen Hebel angeordnet, wodurch sich insbesondere auch Taumelunwuchten, d.h. Unwuchten in Richtung der Drehachse der Wäschetrommel, gut messen lassen. Eine derartige Taumelunwucht lässt sich nicht mittels eines Tachogenerators bestimmen. Jedoch lässt sie sich mittels einer erfindungsgemäßen Anordnung und bei entsprechender Ausrichtung des Sensorelements ermitteln. Bei gleichzeitiger Rückführung des Messsignals in den Regelkreis des Antriebs der Waschmaschine lässt sich mittels Drehzahlrampen, d.h. über die Motoransteuerung, der Effekt der Taumelunwucht kompensieren. Entsprechendes gilt für einen Wäschetrockner.

Vorteilhafte Weiterbildungen ergeben sich aus den Unteransprüchen und aus der Beschreibung.

Vorteilhaft ist in einer anderen Ausführungsform, dass der Sensor sich unterhalb der oberen Außenfläche des Wäschebehandlungsgeräts befindet. Dadurch wird die Messfunktion des Sensors dem Bediener unmittelbar zugänglich gemacht. Vorteilhaft ist, wenn der von dem Sensor gemessene Wert auf einer Anzeigevorrichtung angezeigt wird. Dadurch wird für den Benutzer die Unwucht größenmäßig erkennbar.

Ebenso kann durch eine gesonderte Anzeigevorrichtung auch das Ergebnis einer von dem Sensor durchgeführten Messung für den Bediener angezeigt werden.

Der Sensor zur Bestimmung der Unwucht lässt sich auch dazu einsetzen, um im Ruhezustand der Waschmaschine den in die Wäschetrommel aufgefüllte Wäschemenge in ihrer Masse nachzubestimmen. Mittels des Sensors lässt sich in einer vorteilhaften Ausbildung der Waschmaschine auch eine Warnvorrichtung aktivieren, die ein Warnsignal bei Überladung der Waschmaschine ausgibt. Damit lässt sich auf eine gegenüber dem Stand der Technik neue Weise die Beladung bestimmen, die herkömmlich beispielsweise über eine induktive Wegmessung erfolgt. Entsprechend lässt sich auch die Beladung bzw. das Gewicht bzw. der Wasserstand in einer Waschmaschine oder in einem Geschirrspüler anzeigen.

Mit Vorteil lässt sich der Sensor auch einsetzen, um die Nivellierung jedes Haushaltsgerätes, insbesondere einer Waschmaschine, zu bestimmen. Im Falle einer Waschmaschine kann dabei der Sensor eine Doppelfunktion ausüben: Einmal dient er zur Bestimmung von Unwuchten oder der Masse eines Wäschepostens, und andererseits dient er zur Nivellierung der Waschmaschine. Dabei ist der Sensor nicht nur beim Aufstellen des Haushaltsgerätes nützlich, um dabei erstmals das Haushaltgerät so aufzustellen, dass es in beiden Richtungen in der Ebene waagerecht steht, sondern auch später, um zu überprüfen, ob das Haushaltgerät nach wie vor in beiden Richtungen waagerecht steht, oder ob es sich in einer oder in beiden Richtungen abgesenkt hat. Bei Überschreiten vorgegebener noch zulässiger Abweichungen, wird dabei ein Warnsignal erzeugt, damit der Bediener das Gerät entsprechend wieder neu nivelliert.

In einer weiteren vorteilhaften Ausbildung der Erfindung wird die Nivellierung durch das Hausgerät selber vorgenommen. Hierzu sind Stellmotoren, vorzugsweise im Bereich der Gerätefüße vorhanden, oder es ist ein pneumatisches oder hydraulisches Drucksystem vorgesehen, durch das ein Fluid derart verteilbar ist, dass das Gerät in beiden Richtungen waagerecht steht.

Wenn der Sensor oder eine Mehrzahl von Sensoren über eine Hebelkonstruktion, in einem Gerätefuß oder in einem Dämpfer untergebracht ist, lässt sich das Gewicht des Haushaltsgerätes oder der Zuladung, d.h. die Beladung bei einer Waschmaschine oder einem Wäschetrockner, ermitteln. Die Zuladung kann indirekt über die Auswertung der Beschleunigung des Sensors ermittelt werden. Beschleunigungssensoren sind beispielsweise bekannt durch die Firma Memsic. Der Ablauf der Messung geschieht dabei in folgender Weise: Zunächst wird die Wäschetrommel beladen, dann sinkt sie aufgrund der Beladung ab. Dies führt zu einer Beschleunigung an dem Sensorelement. Ferner wird die Zeit als zweite Größe gemessen. Daraus lässt sich der aufgrund der Beladung mit dem Wäschestück zurückgelegte Weg bestimmen. Aus der Kenntnis der Dämpfung des Haushaltgeräts lässt sich dann nach dem Hookeschen-Gesetz die Kraft bestimmen, die durch die Beladung mit dem Wäschestück hervorgerufen wurde, so dass auch die Unwuchtmasse bestimmt werden kann.

Gegebenenfalls kann die Drehzahl der Waschmaschine reduziert werden und durch Reversieren eine Neuausrichtung des Wäschepostens erreicht werden. Zur Motoransteuerung lassen sich auch Drehzahlrampen fahren. Ein besonderes Problem der Unwuchtmessung stellt die Ermittlung der sogenannten Taumelunwucht dar, d.h. der Unwucht entlang der Achse der Wäschetrommel und des Antriebsmotors. Erfindungsgemäß kann diese jedoch bei entsprechender Wahl und Ausrichtung des Sensorelements ermittelt werden. Bei gleichzeitiger Rückführung des Messsignals im Regelkreis der Maschine kann die Taumelunwucht kompensiert werden. Die Taumelunwucht lässt sich jedoch nur bei einer zweiachsigen Sensorik bestimmen

Nachstehend wird die Erfindung in Ausführungsbeispielen anhand der Zeichnungen näher erläutert. Es zeigen:

Fig. 1 a, b      einen erfindungsgemäßen Sensor im Querschnitt,

Fig. 2      eine mit dem Sensor gemäß Fig. 1 a, b ausgestattete Anordnung zum Nivellieren eines Haushaltsgeräts,

Fig. 3      eine Anordnung zur Ermittlung der Unwucht einer Wäschetrommel sowie der Beladung und des Niveaus einer Waschmaschine,

Fig. 4      ein Ersatzschaltbild für die Messanordnung gemäß Fig. 3.

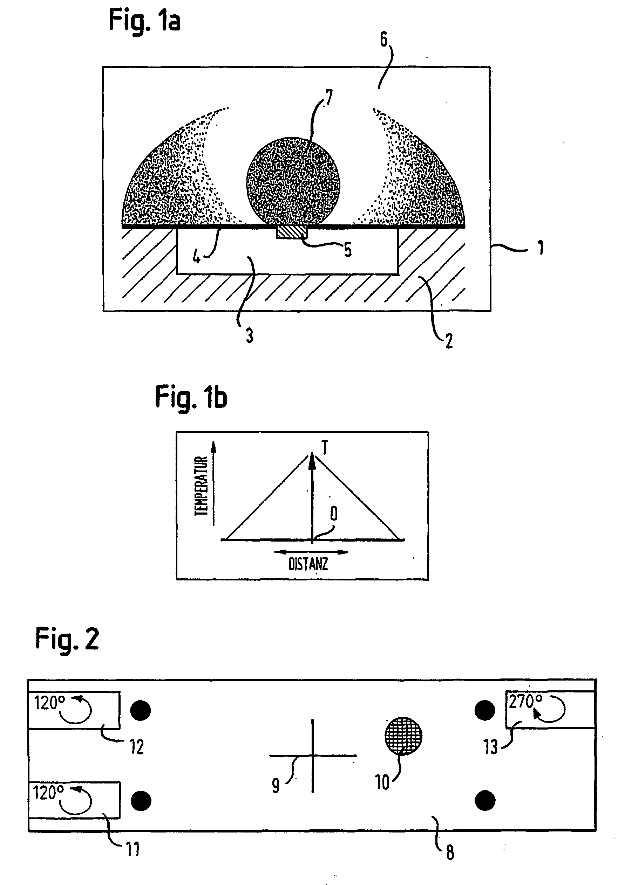

In einer von einer als Druckkapselung dienenden Wand 1 (Fig. 1a, b) umschlossenen Zelle ist auf einem Substrat 2, das vorzugsweise aus Silizium besteht, oberhalb einer kreisförmigen Kreisbohrung 3 eine kreisförmige Platte 4 angeordnet, die als Temperatursensor dient. Die Platte 4 ist in ihrem zentralen Bereich von einem Stab 5 durchbrochen, der sich erwärmt, so dass sich oberhalb des Stabs 5 in einem Raum 6 ein Wärmeprofil ausbildet, das eine mit zunehmender Entfernung von dem Stab 5 abnehmende Temperatur T aufweist. Oberhalb des Stabs 5 entsteht ein im wesentlichen kugel- oder kegelförmiges Gebiet 7 besonders stark erwärmten Gases. In Fig. 1 b ist ausgehend von einem Mittelpunkt O die Temperatur T innerhalb des Raums 6 als Funktion des Abstandes von dem Stab 5 dargestellt. Die Temperatur T fällt dabei im wesentlichen proportional mit zunehmendem Abstand von dem Stab 5 ab.

Wenn nun eine Kraft auf den Sensor wirkt, werden die Gasmoleküle oder Gasatome in dem Raum 6 oberhalb des Stabs 5 gegenüber diesem und der Platte 4 beschleunigt, so dass sich die Lage des Wärmeprofils gegenüber der ursprünglichen Lage verändert. Da in der Platte 4 vorzugsweise pixelweise Sensoren zur Temperaturmessung integriert sind, lässt sich diese Lageveränderung messen als Temperaturänderung in einer der beiden durch die Ebene der Platte 4 aufgespannten Richtungen X und Y. Dabei lässt sich nicht nur die Lageveränderung des Profils selber messen, sondern auch dessen zeitliche Veränderung, indem die Sensoren innerhalb der Platte 4 feststellen, wann das Profil sich verändert hat.

Ebenso baut sich auch ein nicht vollkommen zu dem Stab 5 symmetrisches Wärmeprofil 7 auf, wenn der Stab 5 nicht völlig senkrecht angeordnet ist. Dies lässt sich dazu ausnutzen, um die Nivellierung eines Haushaltgerätes einzustellen. Dabei sind entweder mehrere Sensoren in der Art des in Fig. 1a dargestellten Sensors vorhanden, oder es ist nur ein einziger Sensor in einer der Ecken des Haushaltgerätes auf dessen oberer Oberfläche, d.h. der Arbeitsoberfläche, vorhanden.

Die Abweichung des Haushaltgeräts von der Horizontalen wird in einem Display 8 (Fig. 2) dargestellt, wobei ein Zentrierkreuz 9 anzeigt, wann die Lage des Haushaltgeräts völlig nivelliert ist. In diesem Fall muss eine veränderbare kreisrunde Anzeige 10 mit ihrem Mittelpunkt mit dem Mittelpunkt des Kreuzes 9 zur Deckung gelangt sein. Solange dies noch nicht der Fall ist, müssen, wie in Fig. 2 dargestellt, die Füße des Haushaltgeräts in ihrer Höhe verstellt werden, wozu der Bediener durch die Hinweise auf dem Display eine Anleitung erhält. Die Füße, die verstellt werden müssen, werden durch die Anzeigen 11, 12, 13 dargestellt. Dabei wird auch angezeigt, ob der Fuß hochgedreht werden muss, was bei den Anzeigen 11, 12 der Fall ist, gemäß den die Füße jeweils um 120° hoch gedreht werden müssen, oder ob der Fuß nach unten gedreht werden muss, was bei der Anzeige 13 der Fall ist, gemäß der der Fuß um 270° nach unten gedreht werden muss.

Auf diese Weise lässt sich jedes Hausgerät, insbesondere ein Wäschebehandlungsgerät wie eine Waschmaschine oder ein Wäschetrockner, nivellieren. Die Nivellierinformation kann auch durch die Gerätesteuerung ausgewertet werden. Bei der Erstaufstellung des Haushaltsgeräts an einem Ort kontrolliert der mindestens eine Sensor oder die Mehrzahl der Sensoren die Nivellierung. Falls sie nicht stimmt, wird automatisch mittels Stellmotoren oder mittels eines hydraulischen oder pneumatischen Systems die Höheneinstellung der Stellfüße verändert. Die Nivellierinformation wird entweder optisch angezeigt, wie durch das Display 8, oder sie wird akustisch mittels eines Lautsprechers an den Bediener weitergegeben. Vorzugsweise weist das Haushaltgerät auch eine Schnittstelle für den Anschluss des Haushaltgeräts an das Internet auf, oder es wird telefonisch dem Bediener einer Onlinehilfe für die Justierung gegeben.

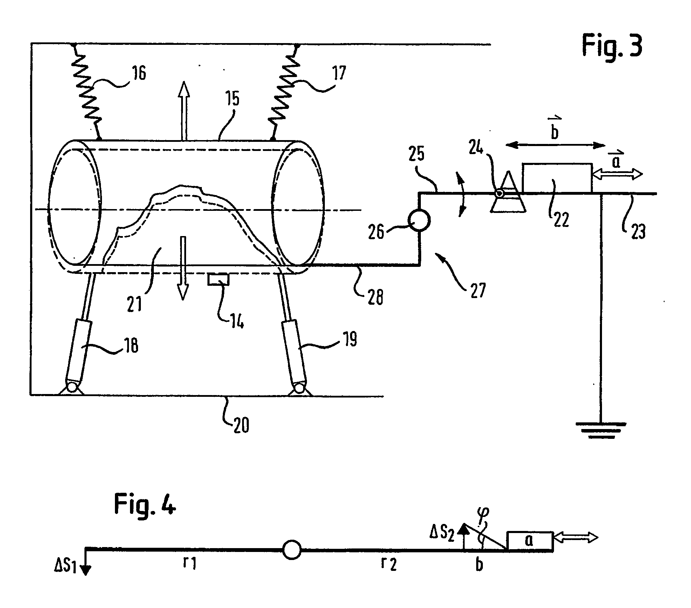

In Figur 3 ist ein Sensor 14 unterhalb eines (hier nur schematisch dargestellten) Laugenbehälters 15 angeordnet. Der Laugenbehälter 15 ist über Zugfedern 16, 17, sowie Dämpfer 18, 19 in einem (hier nicht maßstabsgetreu wiedergegebenen) Haushaltgerät 20 gelagert. Dabei wirkt ein Wäscheposten 21 mit seiner Gewichtskraft zusammen mit dem Gewicht des Laugenbehälters 15 auf die Dämpfer 18, 19 ein.

Anstelle der Anordnung des Sensors 14 unterhalb des Laugenbehälters 21 lässt sich erfindungsgemäß ein Sensor 22 vorsehen, der auf einer Schiene 23 gelagert, die über ein Drehgelenk 24 mit einem Hebelarm 25 eines um einen Drehpunkt 26 drehbaren Hebels 27 verbunden ist. Der andere Hebelarm 28 des Hebels 27 ist mit dem Laugenbehälter 15 parallel zur Richtung der Drehachse des Laugenbehälters 15 verbunden. Über das Drehgelenk 24 wird eine Rotationsbewegung des Hebels 27 in eine Translationsbewegung in Richtung eines Weges b umgewandelt. Wenn der Laugenbehälter 15 in Folge einer Unwucht oder durch die Beladung mit Wäsche mit einer Kraft F, der Gewichtskraft, nach unten beschleunigt wird., wird diese Beschleunigung über den Hebel 27 in eine waagerechte Beschleunigung a entlang des Wegs b umgewandelt.

Aufgrund des Zusammenhangs zwischen dem Weg b und der Beschleunigung a:

$$b = \frac{1}{2} a \cdot t^2,$$

wobei t die Beschleunigungszeit bedeutet und wobei die Gewichtskraft

$$F = M \cdot g,$$

beträgt. Dabei bedeuten M das Gewicht der gesamten Beladung und g die Erdbeschleunigung. Für die Federkraft F, die der Laugenbehälter 15 innerhalb des Dämpfungssystems mit den Zugfedern 16, 17 und den Dämpfern 18, 19 ausübt, gilt:

$$F = D \cdot \Delta s_1,$$

wobei D die Federkonstante und $\Delta s_1$ der in senkrechter Richtung zurückgelegte Weg des Laugenbehälters 15 bedeuten. Für die Zentrifugalkraft $F_z$ gilt:

$$F_z = m \cdot \omega^2 \cdot r,$$

wobei w die Winkelgeschwindigkeit bedeutet und m die Differenz aus Unwucht abzüglich des Gewichts bedeutet. Unter Berücksichtigung des Hebelwegs:

$$\frac{\Delta s_1}{r_1} = \frac{\Delta s_2}{r_2},$$

wobei $r_1$ und $r_2$ die Hebelwege und $\Delta s_1$ sowie $\Delta s_2$ die Wege für die Bewegung des Laugenbehälters 15 bzw. die Bewegung des Hebelarms 25 in senkrechter Richtung bedeuten, ergibt sich für die Masse der Wäsche:

$$M = \frac{D \cdot \tan\varphi \cdot a \cdot t^2 \cdot r_1}{2 \cdot g \cdot r_2}.$$

Dabei gilt für tan φ (vgl. Fig. 4):

$$\tan\varphi = \frac{\Delta s_2}{b}$$

Daraus folgt für die Unwucht m der Wäsche

$$m = \left( \frac{\frac{D \cdot \tan\varphi \cdot a \cdot t^2}{2} - M \cdot g}{\omega^2 r} \right)$$

Somit ist der Sensor 22 in der Lage, Beschleunigungswerte zu messen. Über die Beschleunigungswerte lässt sich dann sowohl die Masse der Wäsche als auch während des Betriebs eine Unwucht der Wäschetrommel bestimmen. Somit ist der Sensor 22 sowohl für statische als auch dynamische Messungen geeignet.

Wenn die Wand 1 des Sensors keine fest stehende Wand ist, sondern eine bewegliche Membran, lässt sich auch durch Aufbringen einer Kraft der Druck innerhalb des Sensors verändern. Die Druckänderung hat dann eine Temperaturänderung zur Folge, die von den in der Platte 4 integrierten Temperatursensoren detektiert wird. Daraus kann eine Kraft berechnet werden, aus der wiederum auf die Masse entweder des Wäschepostens oder auf eine Unwucht geschlossen werden kann. Mittels der Temperatursensoren kann man weiterhin auf Beschleunigungen in der Sensorebene und auf eine Winkeländerung schlie-βen, wie bereits oben anhand der Nivellierung in Verbindung mit Fig. 2 dargestellt. Somit lassen sich mittels eines Sensors, wie er in Fig. 1a dargestellt ist, die Größen Wägung, Nivellierung und Unwuchterkennung ermitteln. Der Sensor ist entweder auf der Laugentrommel aufgebracht, so dass er zur Nivellierung und Unwuchterkennung dient, oder er ist auf der Rahmenkonstruktion des Hausgerätes angeordnet, so dass er neben der Wägung und Unwuchterkennung auch zur Nivellierung des Haushaltgerätes dienen kann. Auf diese Weise wird der Bediener bei der Justierung des Haushaltgerätes bei dessen erstmaligem Aufbau an einer Stelle unterstützt. Ebenso wird der Kunde auch unterstützt bei der Beladung des Haushaltgerätes, indem ihm, beispielsweise über ein Display oder akustisch eine Mitteilung über die bereits eingefüllte Wäsche gemacht wird. Bei Überladung wird ein Warnsignal erzeugt, so dass eine Beschädigung des Haushaltgeräts durch eine zu hohe Masse eines Wäschepostens vermieden wird. Auch eine Taumelunwucht, d.h. eine Unwucht entlang der Trommel-Motorachse der Waschmaschine oder des Wäschetrockners, lässt sich erfindungsgemäß erkennen, so dass Kompensationsmaßnahmen gegen die Taumelunwucht eingeleitet werden können. Dabei kann die Taumelunwucht mittels Drehzahlrampen durch eine entsprechend angepasste Motoransteuerung kompensiert werden. Wenn die Unwucht erkannt worden ist, führt ein Regelmechanismus zum Gegensteuern, beispielsweise zum Reversieren des Wäschepostens.

Es wird ein Beschleunigungssensor für ein Haushaltgerät 20 geschaffen, das sowohl zur Nivellierung des Haushaltgeräts als auch zur Wägung eines in dem Haushaltgerät eingebrachten Gutes, beispielsweise eines Wäschepostens oder von Geschirr, dient und

außerdem, insbesondere für ein Wäschebehandlungsgerät, zur Erkennung von Unwuchten dient. Der Sensor beruht darauf, dass ein von einer Wärmequelle, beispielsweise einem Heizstab 5, erzeugtes Temperaturprofil innerhalb eines abgeschlossenen, ein Gas enthaltenen Raumes 6 infolge der Beschleunigung einer Ortsveränderung erfährt, die über Temperatursensoren gemessen wird, die in einer ebenen Platte 4 angeordnet sind.

**Patentansprüche**

1. Waschmaschine mit mindestens einem Sensor (14, 21, 22), der zur Messung eines Temperaturprofils einer in dem Sensor (14, 21, 22) integrierten Heizvorrichtung ausgebildet ist, wobei das Temperaturprofil durch eine Beschleunigung veränderbar ist, **dadurch gekennzeichnet, dass** der Sensor (22) derart auf einer mit dem Laugenbehälter (15) verbundenen Hebelvorrichtung (27) angeordnet ist, dass das Temperaturprofil durch die von einer Unwucht der Wäschetrommel hervorgerufenen Beschleunigung veränderbar ist, so dass durch den Sensor (22) die Unwucht der Wäschetrommel bestimmbar ist.

2. Waschmaschine nach Anspruch 1, **dadurch gekennzeichnet, dass** der Sensor (22) auf einer Schiene (23) gelagert ist, die über ein Drehgelenk (24) mit einem ersten Hebelarm (25) der um einen Drehpunkt (26) drehbaren Hebelvorrichtung (27) verbunden ist, und dass der zweite Hebelarm (28) der Hebelvorrichtung (27) mit dem Laugenbehälter (15) parallel zur Richtung der Drehachse des Laugenbehälters (15) verbunden ist.

3. Waschmaschine nach Anspruch 1 oder 2, **dadurch gekennzeichnet, dass** die Unwucht eine Unwucht entlang der Achse der Wäschetrommel ist.

4. Waschmaschine nach einem der vorhergehenden Ansprüche, **dadurch gekennzeichnet, dass** der Sensor (14, 21, 22) unterhalb der oberen Außenfläche der Waschmaschine angeordnet ist, und dass der von dem Sensor (22) gemessene Wert auf einer Anzeigevorrichtung (11, 12, 13) anzeigbar ist.

5. Waschmaschine nach einem der vorhergehenden Ansprüche, **dadurch gekennzeichnet, dass** eine Messeinrichtung vorhanden ist, in der aus dem von dem Sensor (22) gemessenen Signal die Masse eines Wäschepostens in der Wäschetrommel bestimmbar ist.

6. Waschmaschine nach Anspruch 5, **dadurch gekennzeichnet, dass** eine Anzeigevorrichtung (11, 12, 13) zur Anzeige der Masse der Wäsche vorhanden ist.

7. Waschmaschine nach Anspruch 5 oder 6, **dadurch gekennzeichnet, dass** eine Warnvorrichtung zur Ausgabe eines Warnsignals bei Überladung der Waschmaschine vorhanden ist.

8. Waschmaschine nach einem der vorhergehenden Ansprüche, **dadurch gekennzeichnet, dass** das Temperaturprofils durch die Lage der Waschmaschine (20), bezogen auf die Richtung des Vektors der Erdbeschleunigung, veränderbar ist.

9. Waschmaschine nach Anspruch 8, **dadurch gekennzeichnet, dass** mit dem Sensor (22) in Verbindung stehende optische oder akustische Anzeigemittel, entweder an der Waschmaschine (20) selbst oder über ein Netz entweder über Leitungen oder über Funk mit diesem verbunden, vorhanden sind, durch die ein Bediener Hinweise auf die Justierung der Waschmaschine (20) erhält.

10. Waschmaschine nach Anspruch 8 oder 9, **dadurch gekennzeichnet, dass** Stellmotoren zur Einstellung der Höhe der Waschmaschine (20) aufgrund der von dem Sensor (22) ermittelten Daten vorhanden sind.

11. Waschmaschine nach Anspruch 8 oder 9, **dadurch gekennzeichnet, dass** ein pneumatisches oder hydraulisches Druckleitungssystem vorhanden ist, durch das aufgrund der von dem Sensor (22) ermittelten Daten die Höhe der Waschmaschine (20) einstellbar ist.

**Claims**

1. Washing machine with at least one sensor (14, 21, 22), which is constructed for measuring a temperature profile of a heating device integrated in the sensor (14, 21, 22), wherein the temperature profile is variable by an acceleration, **characterised in that** the sensor (22) is arranged in such a manner on a lever device (27) connected with the solution container (15) that the temperature profile is variable by the acceleration, which is produced by an imbalance of the laundry drum, so that the imbalance of the laundry drum is determinable by the sensor (22).

2. Washing machine according to claim 1, **characterised in that** the sensor (22) is mounted on a rail (23) which is connected by way of a rotary joint (24) with a first lever arm (25) of the lever device (27) rotatable about a fulcrum (26) and that the second lever arm (28) of the lever device (27) is connected with the solution container (15) parallel to the direction of the axis of rotation of the solution container (15).

3. Washing machine according to claim 1 or 2, **characterised in that** the imbalance is an imbalance along the axis of the laundry drum.

4. Washing machine according to one of the preceding claims, **characterised in that** the sensor (14, 21, 22) is arranged below the upper outer surface of the washing machine and that the value measured by the sensor (22) can be indicated on an indicating device (11, 12, 13).

5. Washing machine according to one of the preceding claims, **characterised in that** a measuring device is present, in which the mass of a laundry batch in the laundry drum is determinable from the signal measured by the sensor (22).

6. Washing machine according to claim 5, **characterised in that** an indicating device (11, 12, 13) for indicating the mass of the laundry is present.

7. Washing machine according to claim 5 or 6, **characterised in that** a warning device for output of a warning signal in the case of overloading of the washing machine is present.

8. Washing machine according to one of the preceding claims, **characterised in that** the temperature profile is variable by the position of the washing machine (20) referred to the direction of the vector of the gravitational acceleration.

9. Washing machine according to claim 8, **characterised in that** optical or acoustic indicating means connected with the sensor (22) are present either at the washing machine (20) itself or connected therewith by way of a mains either via lines or via radio, by which a operator obtains instructions with respect to adjustment of the washing machine (20).

10. Washing machine according to claim 8 or 9, **characterised in that** setting motors for setting the height of the washing machine (20) on the basis of the data ascertained by the sensor (22) are present.

11. Washing machine according to claim 8 or 9, **characterised in that** a pneumatic or hydraulic pressure duct system is present, by which the height of the washing machine (20) is adjustable on the basis of the data ascertained by the sensor (22).

**Revendications**

1. Machine à laver avec au moins un capteur (14, 21, 22) qui est conçu pour mesurer un profil de la température d'un dispositif de chauffage intégré dans le capteur (14, 21, 22), le profil de température pouvant être modifié par une accélération, **caractérisée en ce que** le capteur (22) est disposé de manière telle sur un dispositif de levier (27) relié au réservoir de lessive (15) que le profil de température peut être modifié par l'accélération provoquée par un défaut d'équilibrage du tambour à linge, de sorte que grâce au capteur (22) le défaut d'équilibrage du tambour à linge peut être déterminé.

2. Machine à laver selon la revendication 1, **caractérisée en ce que** le capteur (22) est logé sur un rail (23) qui est relié par une articulation tournante (24) à un premier bras de levier (25) du dispositif de levier (27) mobile autour d'un point de rotation (26), et **en ce que** le deuxième bras de levier (28) du dispositif de levier (27) est relié au réservoir de lessive (15) parallèlement à la direction de l'axe de rotation du réservoir de lessive (15).

3. Machine à laver selon la revendication 1 ou 2, **caractérisée en ce que** le défaut d'équilibrage est un défaut d'équilibrage le long de l'axe du tambour à linge.

4. Machine à laver selon l'une des revendications précédentes, **caractérisée en ce que** le capteur (14, 21, 22) est disposé au-dessous de la surface externe supérieure de la machine à laver, et **en ce que** la valeur mesurée par le capteur (22) peut être affichée sur un dispositif d'affichage (11, 12, 13).

5. Machine à laver selon l'une des revendications précédentes, **caractérisée en ce qu'**un dispositif de mesure est présent, dans lequel à partir du signal mesuré par le capteur (22) la masse d'une charge de linge située dans le tambour à linge peut être déterminée.

6. Machine à laver selon la revendication 5, **caractérisée en ce qu'**un dispositif d'affichage (11, 12, 13) est présent pour afficher la masse du linge.

7. Machine à laver selon la revendication 5 ou 6, **caractérisée en ce qu'**un dispositif d'avertissement destiné à délivrer un signal d'avertissement lors de la surcharge de la machine à laver est présent.

8. Machine à laver selon l'une des revendications précédentes, **caractérisée en ce que** le profil de température peut être modifié par la position de la machine à laver (20) par rapport à la direction du vecteur de l'accélération de la pesanteur.

9. Machine à laver selon la revendication 8, **caractérisée en ce que** des moyens d'affichage optiques ou acoustiques se trouvant en liaison avec le capteur (22) sont présents, soit sur la machine à laver (20) elle-même ou en étant reliés à celle-ci par un réseau soit par des lignes, soit par radio, par lesquels un utilisateur reçoit des informations sur l'ajustage de la machine à laver (20).

10. Machine à laver selon la revendication 8 ou 9, **caractérisée en ce que** des moteurs de positionnement destinés au réglage de la hauteur de la machine à laver (20) sur la base des données déterminées par le capteur (22) sont présents.

11. Machine à laver selon la revendication 8 ou 9, **caractérisée en ce qu'**un système de conduite de pression pneumatique ou hydraulique est présent, par lequel sur la base des données déterminées par le capteur (22) la hauteur de la machine à laver (20) peut être réglée.

## Fig. 1a

## Fig. 1b

## Fig. 2

8

Fig. 3

Fig. 4

EP 1 419 295 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0539617 A1
- EP 1087052 A1
- EP 0972874 A1
- EP 0294014 A1
- EP 0984092 A1

**In der Beschreibung aufgeführte Nicht-Patentliteratur**

- **BUGNACKI M et al.** A micromachined thermal accelerometer for motion, inclination and vibration measurement. Sensors, Helmers Publishing, Juni 2001, vol. 18, 98-104